(19) Europäisches Patentamt
European Patent Office
Office européen des brevets

(11) **EP 3 709 619 B1**

(12) **EUROPEAN PATENT SPECIFICATION**

(45) Date of publication and mention
of the grant of the patent:
**07.09.2022 Bulletin 2022/36**

(21) Application number: **20160189.5**

(22) Date of filing: **28.02.2020**

(51) International Patent Classification (IPC):
*H04N 1/00* *(2006.01)* *B65H 1/26* *(2006.01)*

(52) Cooperative Patent Classification (CPC):
(C-Sets available)
**H04N 1/0066; B65H 1/266; H04N 1/0062;**
B65H 2402/60; B65H 2511/11; B65H 2511/20;
B65H 2515/34 (Cont.)

(54) **END FENCE, FEEDING CASSETTE, FEEDING DEVICE, AND IMAGE FORMING APPARATUS**

ENDANSCHLAG, ZUFÜHRKASSETTE, ZUFÜHRVORRICHTUNG UND
BILDERZEUGUNGSVORRICHTUNG

BARRIERE D'EXTRÉMITÉ, CASSETTE D'ALIMENTATION, DISPOSITIF D'ALIMENTATION ET
APPAREIL DE FORMATION D'IMAGES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.03.2019 CN 201910180209**

(43) Date of publication of application:
**16.09.2020 Bulletin 2020/38**

(73) Proprietor: **Ricoh Company, Ltd.**
**Tokyo 143-8555 (JP)**

(72) Inventors:
• **JIANJIN, Zhang**
**Shanghai, Shanghai (CN)**

• **JUNWEI, Liu**
**Shanghai, Shanghai (CN)**

(74) Representative: **Marks & Clerk LLP**
**15 Fetter Lane**
**London EC4A 1BW (GB)**

(56) References cited:
**EP-A1- 1 413 533** **JP-A- 2016 216 248**
**US-A1- 2008 079 214** **US-A1- 2015 203 311**

EP 3 709 619 B1

(52) Cooperative Patent Classification (CPC): (Cont.)

C-Sets
B65H 2511/11, B65H 2220/01;
B65H 2511/20, B65H 2220/04

**Description**

BACKGROUND OF THE INVENTION

1. Field of the Invention

The present invention relates to an end fence, a feeding cassette, a feeding device, and an image forming apparatus.

2. Description of the Related Art

A feeding device for accommodating and feeding recording media (for example, paper) is used in an image forming apparatus such as a copier, a printer, a facsimile, and the like. In most cases, the feeding device has an end fence, i.e., a member for restricting recording media stacked in a frame body of the feeding device from a rear end portion in a feeding direction. In order to restrict various kinds of recording media of different sizes, it is preferable that the end fence is configured to be movable in the feeding device, and the end fence is reliably fixed in order to ensure that the recording media are fed in a stable manner, and after the recording media are fixed, the end fence is desired to be fixed so as not to be movable in a direction opposite to the feeding direction.

In most cases, the end fence includes a holding means for fixing the end fence to a feeding cassette, a pressure-applying body for applying a force in a feeding direction to the recording media stacked in the feeding cassette frame body, a linkage device for linking the pressure-applying body and the holding means, and the like. However, when the recording media are set in the feeding device and the position of the end fence is fixed, the end fence receives reaction force when the pressure-applying body applies a force to the recording media, and therefore, there is a problem in that the end fence moves in a direction opposite to the feeding direction of the recording media.

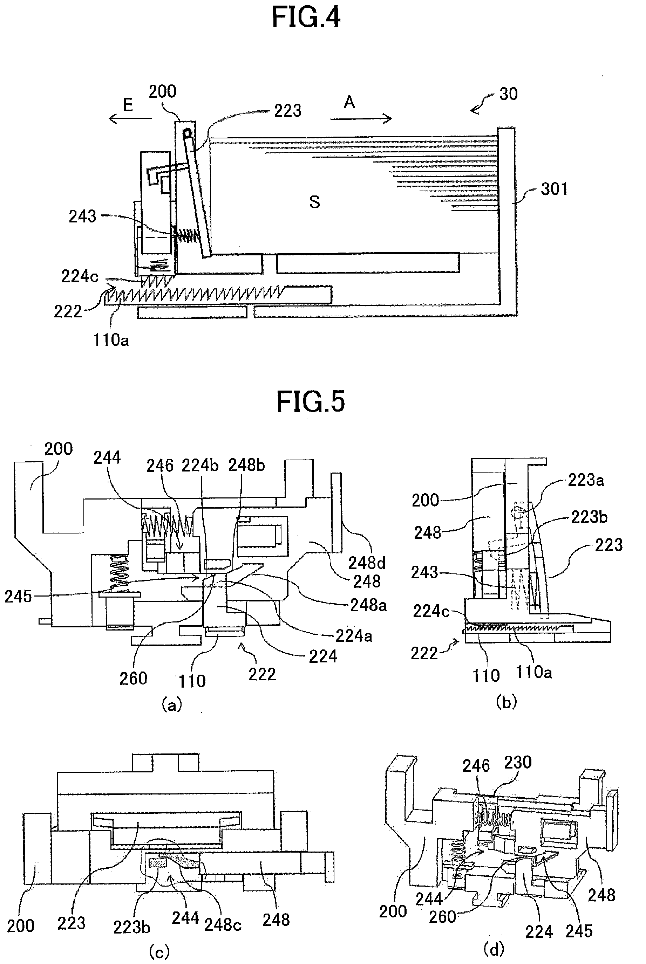

For example, as illustrated in FIG. 4, after a plurality of recording media S are set on a feeding means 30, an end fence main body 200 is pressed toward the recording media S, and a linear compression spring 243 presses a pressure-applying body 223 to move and rotate the pressure-applying body 223 in a feeding direction (i.e., a direction A). However, since a lower end of the pressure-applying body 223 is pressed by the recording media S, the pressure-applying body 223 is moved and rotated in the direction opposite to the feeding direction (i.e., a direction E). Therefore, the linear compression spring 243 is compressed until the front end of the recording media S comes into contact with the wall of a frame body 301 of the feeding means 30, and at this occasion, with a counter action of the compressed linear compression spring 243, the end fence tends to move in the direction E. At this occasion, the end fence main body 200 is switched into a pressing state and a position-fixed state. However, when the pressure-applying body 223 comes into a half-pressing state while returning from a non-pressing state back to a pressing state, the lower end-side of the pressure-applying body 223 is already in contact with the recording media S, and at the same time, the pressure-applying body 223 receives force in a direction opposite to the feeding direction of the recording media S, and more specifically, at this occasion, the end fence main body 200 is receiving a pressing force in the direction E. At this occasion, engagement between an engagement unit 224c of the holding means 222 and a meshing unit 110a of the feeding means has not yet started, and at this occasion, with the linear compression spring 243, the end fence main body 200 may move in the direction opposite to the feeding direction (i.e., the direction E).

In the above case, the end fence may move in the direction opposite to the feeding direction, and this increases a distance between the end fence and a rear end of the recording media S in the feeding direction, and accordingly, the pressing force given by the pressure-applying body 223 to the recording media S decreases. Therefore, the pressure-applying body 223 is unable to push the front end of the recording media S to a predetermined position, and the front end of the recording media S cannot efficiently come into contact with the surface of the feeding roller, or a length of a portion of the recording medium S that comes into contact with the surface of the feeding roller decreases, which makes the feeding of the recording media S unstable, and as a result, problems such as a curl, jam, and the like are likely to occur at the front end.

EP1413533A1 discloses an end fence, sheet feeding cassette, sheet feeding device, and image forming apparatus including the end fence.

SUMMARY OF THE INVENTION

It is an object of the present invention to solve a problem that an end fence is likely to move in a direction opposite to a feeding direction.

According to a first aspect of the present invention, an end fence is provided in a feeding cassette of an image forming apparatus and configured to move back and forth in a feeding direction of a recording medium in the feeding cassette, and the end fence includes an end fence main body, a holding means configured to fix the end fence main body to the feeding cassette, a pressure-applying body provided with the end fence main body and configured to be able to move, rotate, or move and rotate with respect to the end fence main body to protrude from or retract to the end fence main body in the feeding direction of the recording medium, and a switching means configured to cause the end fence to switch between a position-fixed state and a position fixation-released state, by applying a force to the holding means to move the holding means upward or downward with respect to the end fence main body, the position-fixed state being a state in which the end fence is fixed to the feeding cassette, and the position fixation-released state being a state in which position fixation with the feeding cassette is released, wherein the switching means and the pressure-applying body are in contact with and engaged with each other, so that when the holding means is moved upward or downward by the switching means with respect to the end fence main body, the pressure-applying body is also moved, rotated, or moved and rotated by the switching means with respect to the end fence main body, and before the pressure-applying body protrudes with respect to the end fence main body, the holding means moves downward from the end fence main body so as to fix the end fence main body to the feeding cassette.

As compared with a conventional technique, in the present invention, a pressing operation and position fixation operation are linked when position setting is performed, and the position fixation operation of the end fence main body is started before the pressing operation, and therefore, even if the recording media apply a reaction force to the end fence main body via the pressure-applying body, the position of the end fence main body does not move, and the end fence is prevented from moving in a direction opposite to the feeding direction of the recording media.

Further, the end fence may include an automatic returning means provided between the end fence main body and the switching means and configured to apply a force to the switching means to automatically return the end fence from the position fixation-released state to the position-fixed state.

Further, the holding means may include a slide block, and the switching means may include a switching operation unit, a first cam unit, and a fixation holding unit, which are integrally formed, and the switching operation unit may extend to an outside of the end fence main body so as to receive a pressing operation, and a space may be formed between the first cam unit and the fixation holding unit to allow the slide block of the holding means to slide, and when the switching operation unit is pressed, the first cam unit applies a force to the slide block of the holding means to move the holding means upward to switch from the position-fixed state to the position fixation-released state, and when a user stops pressing the switching operation unit, the fixation holding unit applies a force to the slide block of the holding means to move the holding means downward to switch from the position fixation-released state to the position-fixed state.

Further, the end fence may include pressing means configured to provide a downward force to the holding means after the switching means switches to the position-fixed state.

Further, the pressing means may be a protrusion unit provided with the fixation holding unit, and after the slide block slides to render the holding means in the position-fixed state, the pressing means may make an interference fit with the slide block to provide the downward force to the holding means.

Further, the pressing means may be a spring provided between the holding means and the end fence main body.

Further, the automatic returning means may include at least one of a linear spring, an extension spring, a compression spring, and a torsion spring.

Further, the switching means may include a second cam unit, and the pressure-applying body may include a moving body, and the second cam unit and the moving body may come into contact with and engage with each other, so that when the switching means applies a force to the holding means, the second cam unit applies a force to the moving body.

Further, the end fence may include an elastic force-applying means provided between the end fence main body and the pressure-applying body and configured to apply a force to the pressure-applying body to protrude so as to automatically return the pressure-applying body from a state in which the pressure-applying body does not press the recording medium to a state in which the pressure-applying body presses the recording medium.

Further, the elastic force-applying means may be any one of a linear spring, an elastic sponge, a rubber, a torsion spring, and a plate spring.

Further, the holding means may include an engagement unit, and the end fence is fixed by the engagement unit to the feeding cassette.

According to a second aspect of the present invention, a feeding cassette includes a cassette frame body accommodating a recording medium and the end fence according to the first aspect or any one of the aspects based on the first aspect.

According to a third aspect of the present invention, a feeding device includes the feeding cassette according to the second aspect or any one of the aspects based on the second aspect, and a feeding member configured to separate, one by one, the recording medium in the feeding cassette.

According to a fourth aspect of the present invention, an image forming apparatus includes the feeding device according to the third aspect or any one of the aspects based on the third aspect, and an image forming unit configured to form an image on the recording medium fed by the feeding device.

By setting a particular positional relationship between the first cam unit and the second cam unit, the present invention ensures that the position fixation operation of the end fence main body is performed earlier than the pressing operation, and effectively solves a problem of the end fence moving in a direction opposite to the feeding direction of the recording media due to the force applied by the elastic force-applying means, and at the same time, provides a downward force with a pressing device to ensure that the engagement between the engagement unit of the holding means and the engagement unit of the feeding cassette is maximized to prevent disengagement due to shock or vibration.

BRIEF DESCRIPTION OF THE DRAWINGS

FIG. 1 is a drawing illustrating an image forming apparatus according to an embodiment of the present invention;

FIG. 2 (a) and FIG. 2 (b) are drawings illustrating a feeding means inserted into an image forming apparatus according to an embodiment of the present invention;

FIG. 3 is a drawing illustrating the feeding means according to an embodiment of the present invention;

FIG. 4 is a drawing illustrating a usage view of an end fence;

FIG. 5 (a) is a front view illustrating an example of an end fence in a pressing state and a position-fixed state at a maximum engagement position according to an embodiment of the present invention;

FIG. 5 (b) is a right side view illustrating an example of an end fence in the pressing state and the position-fixed state at the maximum engagement position according to an embodiment of the present invention;

FIG. 5 (c) is a plan view illustrating an example of an end fence in the pressing state and the position-fixed state at the maximum engagement position according to an embodiment of the present invention;

FIG. 5 (d) is a perspective view illustrating an example of an end fence in the pressing state and the position-fixed state at the maximum engagement position according to an embodiment of the present invention;

FIG. 6 (a) is a front view illustrating an example of an end fence in a non-pressing state and a position fixation-released state according to an embodiment of the present invention;

FIG. 6 (b) is a right side view illustrating an example of an end fence in the non-pressing state and the position fixation-released state according to an embodiment of the present invention;

FIG. 6 (c) is a plan view illustrating an example of an end fence in the non-pressing state and the position fixation-released state according to an embodiment of the present invention;

FIG. 6 (d) is a perspective view illustrating an example of an end fence in the non-pressing state and the position fixation-released state according to an embodiment of the present invention;

FIG. 7 is a perspective view illustrating an example of an end fence according to an embodiment of the present invention;

FIG. 8 (a) and FIG. 8 (b) are schematic views in which an engagement distance is maximized by a pressing device according to an embodiment of the present invention;

FIG. 9 (a) and FIG. 9 (b) are drawings illustrating each parameter of an end fence for implementing a particular operation order according to an embodiment of the present invention; and

FIG. 10 is a drawing illustrating a relationship of a position fixation operation and a pressing operation in a returning process according to an embodiment of the present invention.

DESCRIPTION OF THE EMBODIMENTS

Hereinafter, although an embodiment of the present invention will be described with reference to a specific embodiment, those skilled in the art can easily understand other advantages and effects of the present invention from the content disclosed in the present description. Although the explanation about the present invention will be given with reference to a preferred embodiment, the features of the present invention are not limited to this embodiment. Rather, the purpose of describing the present invention by way of an embodiment is to cover other options or improvements that may be extended based on the claims of the present invention. In the following explanation, many specific details are included to enhance the understanding of the present invention. The present invention can also be implemented without these details. Also, some specific details have been omitted from the description to avoid confusion or obscuring of the gist of the present invention. It should be noted that the embodiment and the features in the embodiment of the present invention can be combined with each other unless contradiction arises.

In the present description, similar reference symbols and alphabetic characters indicate similar constituent elements in the following drawings. Once a constituent element is defined in any given drawing, it is not necessary to define and interpret similar constituent elements in subsequent drawings again.

In the description of the present embodiment, it should be noted that a direction or a positional relationship indicated by terms such as "upper", "lower", "left", "right", "front", "rear", "top", "bottom", and the like is a direction or a positional relationship indicated on the basis of a drawing, or is a direction or a positional relationship in an ordinary arrangement in which a product according to the present invention is used, and is to easily explain the present invention and to simplify the explanation. In other words, the direction or the positional relationship does not mean or indicate that it is essential for a predetermined device or element to be arranged in a particular direction and to be structured and operated according to the particular direction.

The terms "first", "second", and the like are given only for the purpose of distinguishing between multiple constituent elements, and should not be understood as indicating or implying relative importance.

In the description of the present embodiment, it should be further noted that terms such as "provided", "adjacent to each other", or "connected" should be understood in a broad sense, unless otherwise explicitly defined and specified, and for example, these terms may mean fixedly connected, detachably connected, integrally connected, mechanically connected, electrically connected, directly connected, indirectly connected via an intermediate medium, or in communication through the inside of two elements. For those skilled in the art, specific meanings of the above terms in the present embodiment can be understood according to specific situations.

An embodiment of the present invention will be described in more detail with reference to the accompanying drawings in order to clarify the purpose, technical solution, and advantages of the present invention.

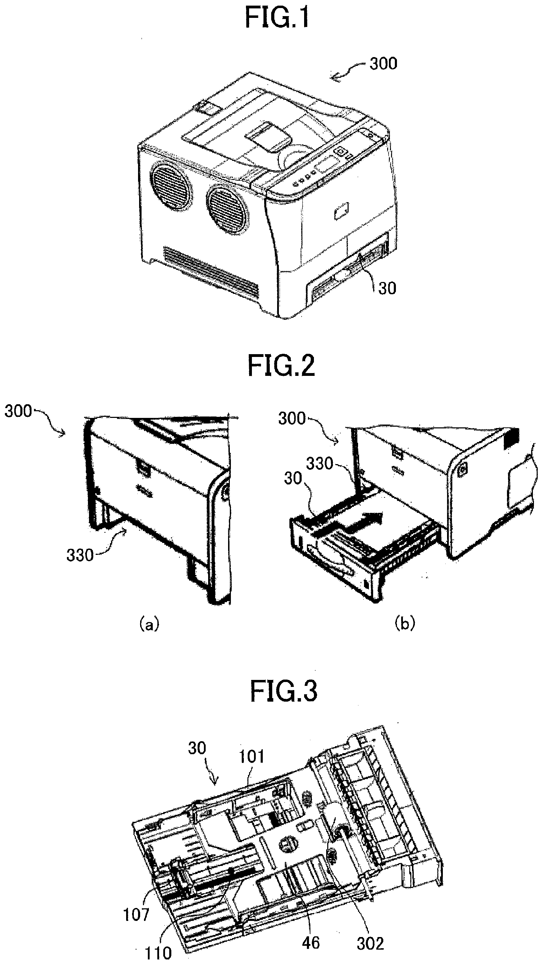

FIG. 1 and FIG. 2 are drawings illustrating an example of an image forming apparatus (e.g., a printer 300) according to the present invention. The printer 300 is provided with a space 330, into or from which a feeding means (e.g., a feeding device) 30 can be inserted or removed.

FIG. 3 and FIG. 4 are examples of a feeding means of an image forming apparatus according to the present invention. As illustrated in FIG. 3 and FIG. 4, the feeding means 30 includes members such as a feeding cassette 101, a feeding roller 302, an end fence 107, and the like. The feeding cassette 101 is to accommodate recording media S such as sheets of paper, and includes cassette frame body members such as a front frame body 301, a rear frame body 110, and the like. The bottom plate 46 is arranged in the feeding cassette 101, and the recording media S are placed on the upper surface of the bottom plate 46. As a feeding member, the feeding roller 302 separates, sheet by sheet, the recording media S, and supplies the separated recording medium S into an image forming unit in the printer 300, so that an image is formed on the recording medium S. The end fence 107 is provided in the feeding cassette 101 in the feeding means 30, and is provided to be movable back and forth along the feeding direction of the recording media in the feeding cassette 101. The front end of the recording media S in the feeding cassette 101 is restricted by the front frame body 301, and the rear end of the recording media S is restricted by the end fence 107. As illustrated in FIG. 4, the meshing unit 110a is provided on the rear frame body 110, and the corresponding engagement unit 224c of the end fence 107 engages with the meshing unit 110a of the rear frame body 110, so that the end fence 107 can be fixed to the feeding cassette 101.

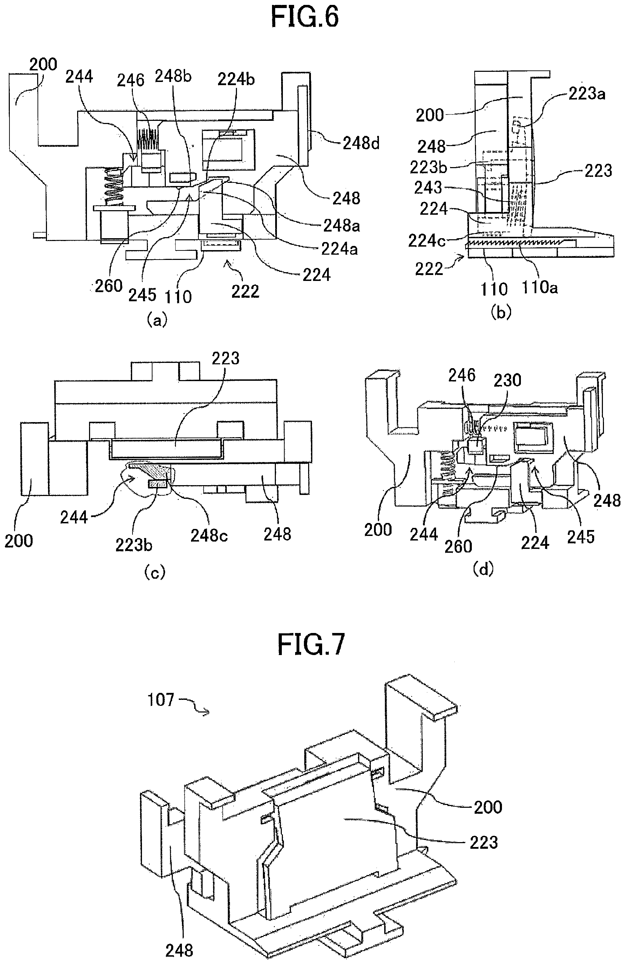

Hereinafter, an end fence according to an embodiment of the present invention will be explained in detail with reference to FIG. 5 to FIG. 7. FIG. 5 (a) to FIG. 5 (d) are schematic views illustrating a state in which the end fence is fixed in the pressing state at the maximum engagement position. FIG. 6 (a) to FIG. 6 (d) are schematic views illustrating a state in which the end fence is in a non-pressing state and a position fixation-released state. FIG. 7 is a perspective view illustrating an example of an end fence.

As illustrated in FIG. 5 to FIG. 7, according to an embodiment of the present invention, the end fence 107 is provided. The end fence 107 includes members such as an end fence main body 200, a holding means 222, a pressure-applying body 223, a switching means 245, and the like.

Among them, the holding means 222 fixes the end fence main body 200 to the feeding cassette 101. The holding means 222 includes a slider 224. Slide blocks 224a and 224b can be provided at a top end portion of the slider 224. The slider 224 can move upward or downward within a certain range. When the slider 224 moves to a position protruding downward from the end fence main body 200, the engagement unit 224c of the slider 224 gradually engages with the meshing unit 110a of the rear frame body 110 of the feeding cassette 101, so that the position of the end fence main body 200 can be fixed to a certain position of the rear frame body 110.

The switching means 245 applies force to the holding means 222 to move the holding means 222 upward or downward with respect to the end fence main body 200, so that the end fence 107 can be switched between the position-fixed state and the position fixation-released state. Here, the position-fixed state means a state in which the end fence 107 can be fixed to the feeding cassette 101. The position fixation-released state means a state in which position fixation of the end fence 107 in the feeding cassette 101 is released.

As illustrated in FIG. 5 and FIG. 6, the switching means 245 includes a fixation switching member 248. The fixation switching member 248 includes a fixation switching cam unit (i.e., a first cam unit) 248a, a fixation holding unit 248b, a switching operation unit 248d, and the like, which are attached to the end fence main body 200 so as to be horizontally movable. Each of the fixation switching cam unit 248a and the fixation holding unit 248b of the fixation switching member 248 includes a flat surface and a slanted surface, and both of the fixation switching cam unit 248a and the fixation holding unit 248b enclose a certain space, so that the slide blocks 224a and 224b can freely slide within this space.

When a user pushes the switching operation unit 248d of the fixation switching member 248 of the switching means 245 horizontally to the inside, the slide block 224a of the top end portion of the slider 224 receives an upward pressing force applied by the edge portion of the slanted surface of the fixation switching cam unit 248a, and accordingly, the slider 224 is retracted to above the lower end surface of the end fence main body 200. As a result, the engagement between the engagement unit 224c of the slider 224 and the meshing unit 110a of the rear frame body 110 of the feeding cassette 101 is released, and the position fixation of the end fence main body 200 is released, which causes the end fence main body 200 to be freely movable along the feeding direction of the recording media S (see FIG. 6).

When a user stops pressing of the switching operation unit 248d, and the fixation switching member 248 moves toward the outside, the slide block 224b of the slider 224 receives a pressing force applied by the edge portion of the slanted surface of the fixation holding unit 248b, and moves to a position where the slider 224 protrudes downward from the end fence main body 200, and accordingly, the engagement unit 224c of the slider 224 and the meshing unit 110a of the rear frame body 110 of the feeding cassette 101 gradually engage with each other until the position of the end fence main body 200 is fixed, and ultimately, the slide block 224b of the slider 224 moves to below the flat surface of the fixation holding unit 248b to restrict the position and maintain the position-fixed state (see FIG. 5).

In addition, the end fence 107 may include, for example, an automatic returning means (e.g., an automatic returning device) such as a linear spring 246. The linear spring is arranged between the end fence main body 200 and the switching means 245, and applies force to the switching means 245 to press the switching means 245 to move within a predetermined range toward the outside. After a user stops pressing the switching operation unit 248d, the linear spring can automatically return the end fence 107 from the position fixation-released state to the position-fixed state.

A first end of the linear spring 246, which is the automatic returning device, can be fixed to an outer periphery of a protruding support on the end fence main body 200. A second end can be fixed to an outer periphery of a protruding support of the fixation switching member 248. When a user presses the switching operation unit 248d horizontally toward the inside, the linear spring 246 is compressed, and as described above, the slider 224 moves to a position above the lower end surface of the end fence main body 200 to release the engagement, and release the position fixation of the end fence main body 200 (see FIG. 6). Then, when a user stops pressing of the switching operation unit 248d by releasing his or her hand from the switching operation unit 248d, the compressed linear spring 246 causes the fixation switching member 248 to automatically move to the outside, and accordingly, the slide block 224b of the slider 224 is pressed by the fixation switching member 248, and moves to a position protruding downward from the end fence main body 200, and ultimately, the slide block 224b of the slider 224 slides to below the flat surface of the fixation holding unit 248b, and the slider 224 receives position restriction of the fixation holding unit 248b to be held in the position-fixed state, i.e., the end fence main body 200 returns back to the position-fixed state (see FIG. 5). Herein, the automatic returning device is not limited to the linear spring according to the present embodiment, and the automatic returning device may be of, for example, various kinds of elastic members such as extension springs, other compression springs, torsion springs, and the like.

The pressure-applying body 223 is provided with the end fence main body 200, and is movable, rotatable, or movable and rotatable with respect to the end fence main body 200 to cause the pressure-applying body 223 to protrude to or retract from the front side (i.e., right-hand side in FIG. 5 (b) and FIG. 6 (b)) along the feeding direction of the recording media S with respect to the end fence main body 200.

An elastic force-applying means (e.g., the linear compression spring 243) can be provided between the end fence main body 200 and the pressure-applying body 223 so as to press the pressure-applying body 223 to protrude in the feeding direction of the recording media S to press the recording media S in the feeding direction, so that the pressure-applying body 223 can be automatically returned from a state in which the pressure-applying body 223 does not press the recording media S to a state in which the pressure-applying body 223 presses the recording media S. The elastic force-applying means (e.g., the linear compression spring 243) is, for example, a linear spring, a first end of which is fixed to an inner surface of the end fence main body 200, and a second end of which extends toward the pressure-applying body 223 and is fixed to an outer periphery of a protruding support protruding from the pressure-applying body 223. With the action of the linear spring 243, the inner surface of the pressure-applying body 223 moves, rotates, or moves and rotates forward in the feeding direction of the recording media S to apply a force in the feeding direction of the recording media S.

Whether the pressure-applying body 223 rotates or moves with respect to the end fence main body 200 is determined according to a connection method between the pressure-applying body 223 and the end fence main body 200. For example, when the pressure-applying body 223 and the end fence main body 200 are connected by a shaft 223a as illustrated in FIG. 5, the pressure-applying body 223 rotates with respect to the shaft 223a according to an action of the linear spring 243, and the shaft 223a can be formed integrally with the pressure-applying body 223. The end fence main body 200 is provided with a space to allow the shaft 223a to move in a certain range, and when the inner surface of the pressure-applying body 223 receives a force given by the linear spring 243, the pressure-applying body 223 can move forward in the feeding direction of the recording media S within a certain range. It should be noted that the above connection method is only an example, and those skilled in the art can install the pressure-applying body 223 using a variety of other generally-available connection methods, and the elastic force-applying means is not limited to the linear spring, but may be of any elastic member such as elastic sponge, rubber, plate spring, torque spring, and the like.

The pressure-applying body 223 may further include a moving body 223b, and the switching means 245 may further include an integrated-type linkage cam unit (i.e., second cam unit) 248c, so that the moving body 223b and the linkage cam unit 248c come into contact with and engage with each other to form a linkage means 244. In a similar manner to the fixation switching cam unit 248a and the fixation holding unit 248b, the linkage cam unit 248c also includes a slanted surface and a flat surface, and is provided at a position where the linkage cam unit 248c comes into contact with the moving body 223b fixed to the inner surface of the pressure-applying body 223. When a user operates the switching means 245 to apply a force to the holding means 222, the linkage cam unit 248c fixed and connected with the switching means 245 can apply a force to the moving body 223b, so that when the holding means 222 is moved upward or downward with respect to the end fence main body 200 by the switching means 245, the pressure-applying body 223 is also moved, rotated, or moved and rotated with respect to the end fence main body 200 by the switching means 245.

The linkage means 244 can switch between the following two states, i.e., a pressing state (FIG. 5 (b)) and a non-pressing state (FIG. 6 (b)). In the pressing state (see FIG. 5 (b)), with a pressing force applied by the linear spring 243 which is a pressing elastic member, the pressure-applying body 223 rotates, moves, or rotates and moves forward in the feeding direction of the recording media S to press the recording media S in the feeding direction. In the non-pressing state (see FIG. 6 (b)), the pressure-applying body 223 receives a force given by the linkage cam unit 248c, and the pressure-applying body 223 rotates in the direction opposite to the feeding direction of the recording media S, so that the pressure-applying body 223 does not press the recording media S in the feeding direction of the recording media S. When a user operates the switching operation unit 248d, the linkage cam unit 248c can move, rotate, or move and rotate between the pressing position (see FIG. 5 (b)), in which the pressure-applying body 223 presses the recording media S, and a non-pressing position (see FIG. 6 (b)), in which the pressure-applying body 223 does not press the recording media S.

In this manner, by providing the linkage means 244, a switching operation into the pressing state and a switching operation into the position-fixed state are linked, and a switching operation into the non-pressing state and a switching operation into the position fixation-released state are also linked. Furthermore, according to an embodiment of the present invention, the positional relationship between the linkage cam unit 248c of the linkage means 244, the moving body 223b of the pressure-applying body 223, the fixation switching cam unit 248a of the switching means 245, and the engagement unit of the holding means 222 can be set accurately, and before an operation in which the pressure-applying body 223 moves forward with respect to the end fence main body 200 to press the recording media S is performed, an operation in which the holding means 222 moves downward with respect to the end fence main body 200 to fix the end fence main body 200 to the feeding cassette 101 is performed. More specifically, before the pressing operation of the pressure-applying body 223, the position fixation operation of the end fence 107 is performed first. Therefore, the embodiment of the present invention can alleviate a problem of the end fence 107 moving in a direction opposite to the feeding direction of the recording media S when a user tries to fix the position of the end fence 107 after the user sets the recording media S in the feeding means 30.

After a user sets a large number of recording media S in the feeding means 30, the user presses the switching operation unit 248d, and at the same time, the user moves the end fence 107 to an appropriate position closest to the rear end in the feeding direction of the recording media S, and thereafter, the user stops pressing the switching operation unit 248d, and as a result, the automatic returning linear spring 246 presses the end fence main body 200 to return back to the pressing state and the position-fixed state of the end fence main body 200. In the returning process, with the holding means 222, the position fixation operation of the end fence main body 200 starts first, and subsequently, with the linkage means 244 and the elastic force-applying means (e.g., the linear compression spring 243), the pressure-applying body 223 returns back to a state in which the recording media S are pressed.

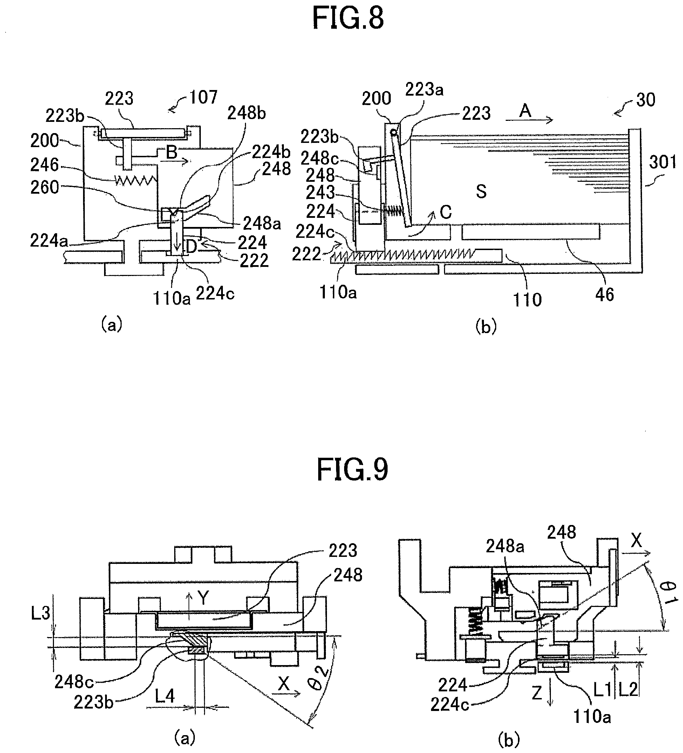

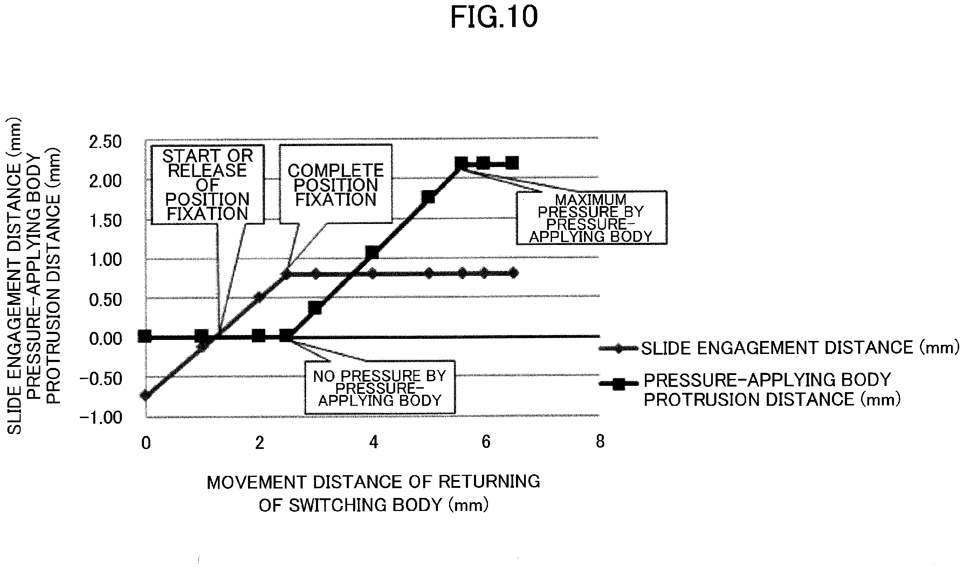

Subsequently, a relationship between parameters of the end fence implementing the operation sequence described above will be explained with reference to FIG. 9 and FIG. 10.

As illustrated in FIG. 9, where a displacement direction of the switching operation unit 248d is defined as an X direction, a displacement direction of the moving body 223b of the pressure-applying body 223 is defined as a Y direction, and a displacement direction of the slider 224 is defined as a Z direction, an angular and positional relationship between the flat surface and the slanted surface of each of the linkage cam unit 248c, the fixation switching cam unit 248a, and the fixation holding unit 248b can be configured as follows.

$$Z \begin{cases} Z = X * \tan(\theta 1) - L1 & (X \leq L2/\tan(\theta 1)) \\ Z = L2 - L1 & (X > L2/\tan(\theta 1)) \end{cases}$$

$$Y \begin{cases} Y = 0 & (X \le L4) \\ Y = (X - L4) * \tan(\theta 2) & (L4 < X \le L3/\tan(\theta 2) + L4) \\ Y = L3 & (X > L3/\tan(\theta 2) + L4) \end{cases}$$

Here, a variable X denotes a movement distance of returning of the switching operation unit 248d, and as illustrated in FIG. 9, when the end fence main body 200 is in the non-pressing state and the position fixation-released state, X=0.

A variable Y denotes a displacement of the moving body 223b of the pressure-applying body 223, and as illustrated in FIG. 9, when the end fence main body 200 is in the non-pressing state and the position fixation-released state, Y=0.

A variable Z denotes an engagement distance between the engagement unit 224c of the slider 224 and the meshing unit 110a of the rear frame body 110 of the feeding cassette 101, and in the state illustrated in FIG. 9, Z is at a minimum.

When Z<0, the engagement unit 224c is not engaged, and the position fixation of the end fence 107 is released,

When Z=0, the engagement unit 224c starts to engage, and the position fixation operation of the end fence 107 starts,

When Z>0, the engagement unit 224c has been engaged, and the position of the end fence 107 is fixed. The larger the variable Z is, the more preferable the effect of the position fixation and the impact resistance becomes.

L1 denotes a distance in the Z direction between a tooth tip of the engagement unit 224c of the slider 224 and a tooth tip of the meshing unit 110a of the feeding cassette 101 when X=0 in the non-pressing state and the position fixation-released state,

L2 denotes a distance in the Z direction between a tooth bottom of the engagement unit 224c of the slider 224 and a tooth tip of the meshing unit 110a of the feeding cassette 101 when X=0 in the non-pressing state and the position fixation-released state,

L3 denotes a distance in the Y direction between two flat surfaces connected to the slanted surface of the cam unit 248c,

L4 denotes an overlapping distance in the X direction between the moving body 223b and the flat surface of the linkage cam unit 248c when X=0 in the non-pressing state and the position fixation-released state,

Θ1 denotes an angle between the flat surface and the slanted surface of the fixation switching cam unit 248a, and

θ2 denotes an angle between the flat surface and the slanted surface of the linkage cam unit 248c.

The relationship between the position fixation operation and the pressing operation in the returning process of the end fence 107 obtained by setting the positional and angular relationship according to the above expression is that, as illustrated in FIG. 10, when the end fence 107 is returned after the switching operation unit 248d is operated, the end fence 107 returns to the pressing state and the position-fixed state according to the action of the automatic returning linear spring 246. In this returning process, first, an operation of the position fixation operation by the end fence 107 starts, and then, an operation for applying a force to the recording media S starts. Thereafter, the returning operation for the position-fixed state by the end fence 107 is finished, whereupon the position of the end fence 107 is completely fixed, i.e., the end fence 107 attains a position-fixed state. Finally, the returning operation for the pressing of the recording media S is finished, and the end fence 107 returns to a complete application of force, i.e., the end fence 107 attains a state of applying force. In this manner, in the process in which the end fence 107 returns, even if the end fence 107 receives a reaction force from the linear compression spring 243, the position of the end fence 107 has already been fixed at this point in time even though the end fence 107 is pressed to move in a direction opposite to the feeding direction. For this reason, a problem associated with the end fence main body 200 moving in a direction opposite to the feeding direction, which occurs when the pressing of the end fence main body 200 starts before the position fixation or when the pressing and the position fixation start at the same point in time, has been solved.

Hereinabove, a means for reducing movement of the end fence 107 in a direction opposite to the feeding direction according to the present invention has been explained with reference to drawings. However, in an actual usage process of an image forming apparatus such as the printer 300, when a user or a worker pulls out or inserts the feeding means 30 from or into the space 330 of the image forming apparatus (e.g., the printer 300), a large impact may be given to the feeding means 30 due to unfamiliarity, carelessness, or violent pushing, and the end fence 107 may be disengaged, and with the force, the end fence 107 may move in a direction opposite to the feeding direction.

For example, as illustrated in FIG. 4, in a case where it is assumed that the recording media S are accommodated in the feeding means 30, and the end fence 107 is fixed at a theoretically corrected position, and when the feeding means 30 loaded with a large number of recording media S is set in the main body of the image forming apparatus, and the user or the worker inserts the feeding means 30 into the image forming apparatus rapidly and violently, the feeding means 30 stops at the moment when the feeding means hits the restriction position of the main body of the image forming apparatus, and at this occasion, the fixed end fence 107 receives a great shock from a large force applied by the recording media S, and accordingly the fixed end fence 107 tends to move in the direction E in a similar manner, and each member of the end fence may violently vibrate.

Normally, in order to allow the end fence 107 to freely move in the feeding cassette 101 in the feeding direction of the recording media S, a certain gap is provided in the vertical direction between the end fence main body 200 and the rear frame body 110 of the feeding cassette 101. In order to allow the fixation switching member 248 to freely move horizontally with respect to the end fence main body 200, a certain gap is also provided in the vertical direction between the fixation switching member 248 and the end fence main body 200. Also, in view of the workability of component parts, a certain gap is usually left between component parts. Therefore, even in a state in which the position of the end fence 107 is fixed, the flat surface of the slide block 224b of the slider 224 and the flat surface of the fixation holding unit 248b are not in contact with each other, and are in such a state that a certain gap remains between them. More specifically, in the position-fixed state, the slider 224 also has a space to move upward or downward along the engagement direction. When the end fence 107 receives a shock, the engagement unit 224c of the slider 224 may move in a direction away from the engagement, and the engagement distance between the slider 224 and the rear frame body 110 of the feeding means 30 decreases, and accordingly, the engagement unit 224c may be released from the meshing unit 110a of the feeding means 30, and as a result, the engagement unit 224c and the meshing unit 110a may be disengaged from each other. In other words, when the end fence 107 receives a shock, the end fence 107 may proceed to the position fixation-released state. Therefore, the strength of the position fixation of the end fence main body 200 fixed by the engagement between the slider 224 and the rear frame body 110 of the feeding means 30 decreases, i.e., the impact resistance of the end fence 107 decreases. For this reason, the end fence 107 in the position fixation-released state may move in a direction opposite to the feeding direction (i.e., the direction E) due to the impact of the recording media S.

In order to solve the above problem, according to another embodiment of the present invention, as illustrated in FIG. 8 (a), the end fence main body 200 is provided with a pressing means (a pressing device) having a protrusion unit 260 formed on the flat surface of the fixation holding unit 248b. The protrusion unit 260 and the fixation switching member 248 may be integrated. When the protrusion unit 260 serving as the pressing means faces the slanted surface of the slide block 224b of the slider 224, and the end fence 107 is in the position-fixed state, the protrusion unit 260 and the slanted surface of the slide block 224b of the slider 224 make an interference fit to give a downward force.

The protrusion unit 260 and the slanted surface of the slide block 224b of the slider 224 have a certain interference fit, and therefore, in a case where the flat surface of the slide block 224b of the slider 224 and the flat surface of the fixation holding unit 248b are not in contact with each other even in the position-fixed state, the interference fit between them presses the slider 224 to move the slider 224 in the direction of the engagement, and the engagement distance between the slider 224 and the rear frame body 110 increases. Therefore, the engagement distance is of a maximum value of a target maximum engagement distance without any decreasing. Accordingly, the performance of the end fence 107 to withstand the impact from the recording media S is improved, and as illustrated in FIG. 8 (b), a movement of the end fence 107 in a direction opposite to the feeding direction is efficiently prevented, and the pressure-applying body 223 is configured to be able to continuously apply a force in a diagonally upward direction of the feeding direction (direction C in FIG. 8 (b)).

Furthermore, the protrusion unit 260 is provided on the flat surface of the fixation holding unit 248b of the fixation switching member 248, i.e., the pressing operation to the slider 224 of the holding means 222 is performed after the position of the end fence main body 200 is fixed. As a result, in the process of returning the fixation switching member 248 with the automatic returning device 246, the returning of the fixation switching member 248 is not affected, i.e., it is guaranteed that returning of the end fence main body 200 to the position-fixed state and returning of the end fence main body 200 to the pressing state are not affected. The position fixation and pressing operation of the end fence main body 200 can be performed smoothly.

Therefore, according to another embodiment of the present invention, a pressing means (a pressing device) can be implemented by providing a linear spring between the slider 224 and the end fence main body 200, although the number of component parts increases, and the linear spring occupies a certain space. In contrast, in the aspect in which the protrusion unit 260 is provided, the protrusion unit 260 and the fixation switching member 248 can be formed integrally. Accordingly, the number of components can be reduced, and the cost can be saved. In addition, the space can be saved, and the end fence can be reduced in size.

According to the end fence 107 explained above, as illustrated in FIG. 6, when the switching operation unit 248d of the fixation switching member 248 is pressed and operated, the fixation switching member 248 moves horizontally, and a contact position between the linkage cam unit 248c of the fixation switching member 248 and the moving body 223b of the pressure-applying body 223 changes, and as a result, the pressure-applying body 223 rotates to the non-pressing position in which the pressure-applying body 223 does not protrude forward in the feeding direction of the recording media S and does not apply a force to the recording media S. In addition, an engagement between the engagement unit 224c of the slider 224 and the meshing unit 110a of the rear frame body 110 of the feeding cassette 101 is released, and the position fixation of the end fence main body 200 is released, so that the end fence main body 200 becomes freely movable along the feeding direction of the recording media S. When a user stops pressing the switching operation unit 248d, the fixation switching member 248 moves to the outside according to the force given by the automatic returning device 246, but, first, the switching means 245 causes the engagement unit 224c of the slider 224 and the meshing unit 110a of the rear frame body 110 of the feeding cassette 101 to start engagement, and the position of the end fence main body 200 is fixed, and the position fixation holding operation starts. Then, with the linkage means 244, the pressure-applying body 223 receives a force applied by the elastic force-applying means (e.g., the linear compression spring 243), and an operation to rotate from a non-pressing state to a pressing state is automatically started, and finally, with the protrusion unit 260, the gap is reduced, and the engagement distance attains a maximum state. As described above, it is ensured to smoothly perform the fixation of the position of the end fence main body 200, and the end fence 107 can be prevented from moving in a direction opposite to the feeding direction.

Hereinabove, although the embodiment of the present invention has been described in detail with reference to the drawings, the use of the technical solution of the present invention is not limited to the various applications listed in the embodiment of the present invention. Various advantageous effects described above can be attained because various structures and modifications can be easily implemented by referring to the technical solution of the present invention.

## Claims

1. An end fence (107) provided in a feeding cassette (101) of an image forming apparatus (300) and configured to move back and forth in a feeding direction of a recording medium (S) in the feeding cassette (101), the end fence (107) comprising:

   an end fence main body (200);
   a holding means (222) configured to fix the end fence main body (200) to the feeding cassette (101);
   a pressure-applying body (223) provided with the end fence main body (200) and configured to be able to move, rotate, or move and rotate with respect to the end fence main body (200) to protrude from or retract to the end fence main body (200) in the feeding direction of the recording medium (S); and
   a switching means (245) configured to cause the end fence to switch between a position-fixed state and a position fixation-released state, by applying a force to the holding means (222) to move the holding means (222) upward or downward with respect to the end fence main body (200), the position-fixed state being a state in which the end fence (107) is fixed to the feeding cassette (101), and the position fixation-released state being a state in which position fixation with the feeding cassette (101) is released,
   wherein the switching means (245) and the pressure-applying body (223) are in contact with and engaged with each other, so that when the holding means (222) is moved upward or downward by the switching means (245) with respect to the end fence main body (200), the pressure-applying body (223) is also moved, rotated, or moved and rotated by the switching means (245) with respect to the end fence main body (200), and
   **characterized in that**:
   before the pressure-applying body (223) protrudes with respect to the end fence main body (200), the holding means (222) moves downward from the end fence main body (200) so as to fix the end fence main body (200) to the feeding cassette (101).

2. The end fence (107) according to claim 1, further comprising an automatic returning means (246) provided between the end fence main body (200) and the switching means (245) and configured to apply a force to the switching means (245) to automatically return the end fence (107) from the position fixation-released state to the position-fixed state.

3. The end fence (107) according to claim 2, wherein the holding means (222) includes a slide block (224a, 224b),

   the switching means (245) includes a switching operation unit (248d), a first cam unit (248a), and a fixation holding unit (248b), which are integrally formed,
   the switching operation unit (248d) extends to an outside of the end fence main body (200) so as to receive a pressing operation,
   a space is formed between the first cam unit (248a) and the fixation holding unit (248b) to allow the slide block (224a, 224b) of the holding means (222) to slide,
   when the switching operation unit (248d) is pressed, the first cam unit (248a) applies a force to the slide block (224a) of the holding means (222) to move the holding means (222) upward to switch from the position-fixed state to the position fixation-released state, and
   when the switching operation unit (248d) is not pressed, the fixation holding unit (248b) applies a force to the slide block (224b) of the holding means (222) to move the holding means (222) downward to switch from the position fixation-released state to the position-fixed state.

4. The end fence (107) according to claim 3, further comprising a pressing means configured to provide a downward force to the holding means (222) after the switching means (245) switches to the position-fixed state.

5. The end fence (107) according to claim 4, wherein the pressing means is a protrusion unit (260) provided with the fixation holding unit (248b), and
after the slide block (224a, 224b) slides to render the holding means (222) in the position-fixed state, the pressing means makes an interference fit with the slide block (224b) to provide the downward force to the holding means (222).

6. The end fence (107) according to claim 4, wherein the pressing means is a spring provided between the holding means (222) and the end fence main body (200).

7. The end fence (107) according to any one of claims 2 to 6, wherein the automatic returning means (246) includes at least one of a linear spring, an extension spring, a compression spring, and a torsion spring.

8. The end fence (107) according to any one preceding claim, wherein the switching means (245) includes a second cam unit (248c),

the pressure-applying body (223) includes a moving body (223b),
the second cam unit (248c) and the moving body (223b) come into contact with and engage with each other, so that when the switching means (245) applies a force to the holding means (222), the second cam unit (248c) applies a force to the moving body (223b).

9. The end fence (107) according to any one preceding claim, further comprising an elastic force-applying means (243) provided between the end fence main body (200) and the pressure-applying body (223) and configured to applying a force to the pressure-applying body (223) to protrude so as to automatically return the pressure-applying body (223) from a state in which the pressure-applying body (223) does not press the recording medium (S) to a state in which the pressure-applying body (223) presses the recording medium (S).

10. The end fence (107) according to claim 9, wherein the elastic force-applying means (243) is any one of a linear spring, an elastic sponge, a rubber, a torsion spring, and a plate spring.

11. The end fence (107) according to any one preceding claim, wherein the holding means (222) includes an engagement unit (224c), and the end fence (107) is fixed by the engagement unit (224c) to the feeding cassette (101).

12. A feeding cassette (101) comprising:

a cassette frame body (301) accommodating a recording medium (S); and
the end fence (107) according to any one of claims 1 to 11.

13. A feeding device (30) comprising:

the feeding cassette (101) according to claim 12; and
a feeding member (302) configured to separate, one by one, the recording medium (S) in the feeding cassette (101).

14. An image forming apparatus (300) comprising:

the feeding device (30) according to claim 13; and
an image forming unit configured to form an image on the recording medium (S) fed by the feeding device (30).

**Patentansprüche**

1. Anschlagelement (107), das in einer Zuführkassette (101) einer Bilderzeugungsvorrichtung (300) bereitgestellt wird und dafür konfiguriert ist, sich in Zuführrichtung eines Aufzeichnungsmediums (S) in der Zuführkassette (101) vor- und zurückzubewegen,
wobei das Anschlagelement (107) Folgendes umfasst:

einen Anschlagelement-Hauptkörper (200),
ein Haltemittel (222), das dafür konfiguriert ist, den Anschlagelement-Hauptkörper (200) an der Zuführkassette (101) zu befestigen,
einen Druck ausübenden Körper (223), der mit dem Anschlagelement-Hauptkörper (200) zur Verfügung gestellt wird und dafür konfiguriert ist, dazu in der Lage zu sein, sich zu bewegen, sich zu drehen oder sich in Bezug auf den Anschlagelement-Hauptkörper (200) zu bewegen und zu drehen, um in Zuführrichtung des Aufzeichnungsmediums (S) von dem Anschlagelement-Hauptkörper (200) vorzuspringen oder sich zu demselben einzuziehen, und
ein Umschaltmittel (245), das dafür konfiguriert ist, zu bewirken, dass das Anschlagelement zwischen einem Zustand mit fixierter Position und einem Zustand mit gelöster Positionsfixierung umschaltet, durch Ausüben einer Kraft auf das Haltemittel (222), um das Haltemittel (222) in Bezug auf den Anschlagelement-Hauptkörper (200) nach oben oder nach unten zu bewegen, wobei der Zustand mit fixierter Position ein Zustand ist, in dem das Anschlagelement (107) an der Zuführkassette (101) befestigt ist, und der Zustand mit gelöster Positionsfixierung ein Zustand ist, in dem die Positionsfixierung mir der Zuführkassette (101) gelöst ist,
wobei das Umschaltmittel (245) und der Druck ausübende Körper (223) miteinander in Berührung und in Eingriff gebracht sind, so dass, wenn das Haltemittel (222) durch das Umschaltmittel (245) in Bezug auf den Anschlagelement-Hauptkörper (200) nach oben oder nach unten bewegt wird, der Druck ausübende Körper (223) durch das Umschaltmittel (245) ebenfalls bewegt, gedreht oder in Bezug auf den Anschlagelement-Hauptkörper (200) bewegt und gedreht wird, und
**dadurch gekennzeichnet, dass**:
bevor der Druck ausübende Körper (223) in Bezug auf den Anschlagelement-Hauptkörper (200) vorspringt, sich das Haltemittel (222) von dem Anschlagelement-Hauptkörper (200) aus nach unten bewegt, um so den Anschlagelement-Hauptkörper (200) an der Zuführkassette (101) zu befestigen.

2. Anschlagelement (107) nach Anspruch 1, das ferner ein automatisches Rückführungsmittel (246) umfasst, das zwischen dem Anschlagelement-Hauptkörper (200) und dem Umschaltmittel (245) bereitgestellt wird und dafür konfiguriert ist, eine Kraft auf das Umschaltmittel (245) auszuüben, um das Anschlagelement (107) automatisch von dem Zustand mit gelöster Positionsfixierung zu dem Zustand mit fixierter Position zurückzuführen.

3. Anschlagelement (107) nach Anspruch 2, wobei das Haltemittel (222) einen Gleitblock (224a, 224b) einschließt,

das Umschaltmittel (245) eine Umschaltbetätigungseinheit (248d), eine erste Nockeneinheit (248a) und eine Fixierungshalteeinheit (248b) einschließt, die integral geformt sind,
sich die Umschaltbetätigungseinheit (248d) bis zu einer Außenseite des Anschlagelement-Hauptkörpers (200) erstreckt, um so eine Druckbetätigung zu empfangen,
ein Raum zwischen der ersten Nockeneinheit (248a) und der Fixierungshalteeinheit (248b) gebildet ist, um zu ermöglichen, dass der Gleitblock (224a, 224b) des Haltemittels (222) gleitet,
wenn die Umschaltbetätigungseinheit (248d) gedrückt wird, die erste Nockeneinheit (248a) eine Kraft auf den Gleitblock (224a) des Haltemittels (222) ausübt, um das Haltemittel (222) nach oben zu bewegen, um von dem Zustand mit fixierter Position zu dem Zustand mit gelöster Positionsfixierung umzuschalten, und
wenn die Umschaltbetätigungseinheit (248d) nicht gedrückt wird, die Fixierungshalteeinheit (248b) eine Kraft auf den Gleitblock (224b) des Haltemittels (222) ausübt, um das Haltemittel (222) nach unten zu bewegen, um von dem Zustand mit gelöster Positionsfixierung zu dem Zustand mit fixierter Position umzuschalten.

4. Anschlagelement (107) nach Anspruch 3, das ferner ein Druckmittel umfasst, das dafür konfiguriert ist, eine Kraft nach unten auf das Haltemittel (222) auszuüben, nachdem das Umschaltmittel (245) zu dem Zustand mit fixierter Position umschaltet.

5. Anschlagelement (107) nach Anspruch 4, wobei das Druckmittel eine Vorsprungseinheit (260) ist, die mit der Fixierungshalteeinheit (248b) zur Verfügung gestellt wird, und,
nachdem der Gleitblock (224a, 224b) gleitet, um das Haltemittel (222) in den Zustand mit fixierter Position zu bringen, das Druckmittel eine Presspassung mit dem Gleitblock (224b) herstellt, um die Kraft nach unten auf das Haltemittel (222) auszuüben.

6. Anschlagelement (107) nach Anspruch 4, wobei das Druckmittel eine Feder ist, die zwischen dem Haltemittel (222) und dem Anschlagelement-Hauptkörper (200) bereitgestellt wird.

7. Anschlagelement (107) nach einem der Ansprüche 2 bis 6, wobei das automatische Rückführungsmittel (246) mindestens eines von einer linearen Feder, einer Zugfeder, einer Druckfeder und einer Drehfeder einschließt.

8. Anschlagelement (107) nach einem der vorhergehenden Ansprüche, wobei das Umschaltmittel (245) eine zweite Nockeneinheit (248c) einschließt,

der Druck ausübende Körper (223) einen sich bewegenden Körper (223b) einschließt,
die zweite Nockeneinheit (248c) und der sich bewegende Körper (223b) miteinander in Berührung kommen und einander in Eingriff nehmen, so dass, wenn das Umschaltmittel (245) eine Kraft auf das Haltemittel (222) ausübt, die zweite Nockeneinheit (248c) eine Kraft auf den sich bewegenden Körper (223b) ausübt.

9. Anschlagelement (107) nach einem der vorhergehenden Ansprüche, das ferner ein elastisches Kraft ausübendes Mittel (243) umfasst, das zwischen dem Anschlagelement-Hauptkörper (200) und dem Druck ausübenden Körper (223) bereitgestellt wird und dafür konfiguriert ist, eine Kraft auf den Druck ausübenden Körper (223) auszuüben, damit er vorspringt, um so den Druck ausübenden Körper (223) automatisch von einem Zustand, in dem der Druck ausübende Körper (223) das Aufzeichnungsmedium (S) nicht drückt, zu einem Zustand, in dem der Druck ausübende Körper (223) das Aufzeichnungsmedium (S) drückt, zurückzuführen.

10. Anschlagelement (107) nach Anspruch 9, wobei das elastische Kraft ausübende Mittel (243) ein beliebiges von einer linearen Feder, einem elastischen Schwamm, einem Gummi, einer Drehfeder und einer Blattfeder ist.

11. Anschlagelement (107) nach einem der vorhergehenden Ansprüche, wobei das Haltemittel (222) eine Eingriffseinheit (224c) einschließt und das Anschlagelement (107) durch die Eingriffseinheit (224c) an der Zuführkassette (101) befestigt wird.

12. Zuführkassette (101), die Folgendes umfasst:

einen Kassettenrahmenkörper (301), der ein Aufzeichnungsmedium (S) aufnimmt, und
das Anschlagelement (107) nach einem der Ansprüche 1 bis 11.

13. Zuführvorrichtung (30), die Folgendes umfasst:

die Zuführkassette (101) nach Anspruch 12 und
ein Zuführelement (302), das dafür konfiguriert ist, Stück für Stück, das Aufzeichnungsmedium (S) in der Zuführkassette (101) zu trennen.

14. Bilderzeugungsvorrichtung (300), die Folgendes umfasst:

die Zuführvorrichtung (30) nach Anspruch 13 und
eine Bilderzeugungseinheit, die dafür konfiguriert ist, ein Bild auf dem Aufzeichnungsmedium (S) zu erzeugen, das durch die Zuführvorrichtung (30) zugeführt wird.

**Revendications**

1. Butée (107) fournie dans une cassette d'alimentation (101) d'un appareil de formation d'image (300) et configurée pour se déplacer d'avant en arrière dans une direction d'alimentation d'un support d'enregistrement (S) dans la cassette d'alimentation (101),
la butée (107) comprenant :

un corps principal de butée (200),
un moyen de maintien (222) configuré pour fixer le corps principal de butée (200) sur la cassette d'alimentation (101),
un corps d'application de pression (223) fourni avec le corps principal de butée (200) et configuré pour être capable de se déplacer, tourner ou se déplacer et tourner par rapport au corps principal de butée (200) afin de faire saillie ou se rétracter du corps principal de butée (200) dans la direction d'alimentation du support d'enregistrement (S), et

un moyen de commutation (245) configuré pour amener la butée à commuter entre un état de position fixe et un état de fixation de position libérée, en appliquant une force sur le moyen de maintien (222) pour déplacer le moyen de maintien (222) vers le haut ou vers le bas par rapport au corps principal de butée (200), l'état de position fixe étant un état dans lequel la butée(107) est fixée à la cassette d'alimentation (101) et l'état de fixation de position libérée étant un état dans lequel la fixation de position avec la cassette d'alimentation (101) est libérée, dans laquelle le moyen de commutation (245) et le corps d'application de pression (223) sont en contact et en prise l'un avec l'autre, de telle manière que lorsque le moyen de maintien (222) est déplacé vers le haut ou vers le bas par le moyen de commutation (245) par rapport au corps principal de butée (200), le corps d'application de pression (223) est également déplacé, tourné, ou déplacé et tourné par le moyen de commutation (245) par rapport au corps principal de butée (200), et

**caractérisé en ce que** :

avant que le corps d'application de pression (223) ne fasse saillie par rapport au corps principal de butée (200), le moyen de maintien (222) se déplace vers le bas à partir du corps principal de butée (200) de façon à fixer le corps principal de butée (200) à la cassette d'alimentation (101).

2. Butée (107) selon la revendication 1, comprenant en outre un moyen de renvoi automatique (246) agencé entre le corps principal de butée (200) et le moyen de commutation (245) et configuré pour appliquer une force sur le moyen de commutation (245) pour renvoyer automatiquement la butée (107) de l'état de fixation de position libérée à l'état de position fixe.

3. Butée (107) selon la revendication 2, dans laquelle le moyen de maintien (222) inclut un coulisseau (224a, 224b),

le moyen de commutation (245) inclut une unité d'actionnement de commutation (248d), une première unité de came (248a), et une unité de maintien de fixation (248b), qui sont formées solidairement,

l'unité d'actionnement de commutation (248d) s'étend jusqu'à l'extérieur du corps principal de butée (200) de façon à recevoir un actionnement de pressage,

un intervalle est formé entre la première unité de came (248a) et l'unité de maintien de fixation (248b) pour permettre au coulisseau (224a, 224b) du moyen de maintien (222) de coulisser,

lorsque l'unité d'actionnement de commutation (248d) est pressée, la première unité de came (248a) applique une force sur le coulisseau (224a) du moyen de maintien (222) pour déplacer le moyen de maintien (222) vers le haut pour commuter de l'état de position fixe à l'état de fixation de position libérée, et

lorsque l'unité d'actionnement de commutation (248d) n'est pas pressée, l'unité de maintien de fixation (248b) applique une force sur le coulisseau (224b) du moyen de maintien (222) pour déplacer le moyen de maintien (222) vers le bas pour commuter de l'état de fixation de position libérée à l'état de position fixe.

4. Butée (107) selon la revendication 3, comprenant en outre un moyen de pressage configuré pour appliquer une force vers le bas sur le moyen de maintien (222) après que le moyen de commutation (245) commute à l'état de position fixe.

5. Butée (107) selon la revendication 4, dans laquelle le moyen de pressage est une unité faisant saillie (260) fournie avec l'unité de maintien de fixation (248b), et

après que le coulisseau (224a, 224b) glisse pour remettre le moyen de maintien (222) dans l'état de position fixe, le moyen de pressage produit un ajustement serré avec le coulisseau (224b) pour fournir la force vers le bas au moyen de maintien (222).

6. Butée (107) selon la revendication 4, dans laquelle le moyen de pressage est un ressort agencé entre le moyen de maintien (222) et le corps principal de butée (200).

7. Butée (107) selon l'une quelconque des revendications 2 à 6, dans laquelle le moyen de renvoi automatique (246) inclut au moins un parmi un ressort linéaire, un ressort d'extension, un ressort de compression et un ressort de torsion.

8. Butée (107) selon l'une quelconque des revendications précédentes, dans laquelle le moyen de commutation (245) inclut une deuxième unité de came (248c),

le corps d'application de pression (223) inclut un corps mobile (223b),

la deuxième unité de came (248c) et le corps mobile (223b) viennent en contact et se mettent en prise l'un avec l'autre, de telle manière que lorsque le moyen de commutation (245) applique une force sur le moyen de maintien (222), la deuxième unité de came (248c) applique une force sur le corps mobile (223b).

9. Butée (107) selon l'une quelconque des revendications précédentes, comprenant en outre un moyen élastique d'application de force (243) fourni entre le corps principal de butée (200) et le corps d'application d'une pression (223) et configuré pour appliquer une force sur le corps d'application de pression (223) pour le faire saillir de façon à renvoyer automatiquement le corps d'application de pression (223) d'un état dans lequel le corps d'application de pression (223) ne presse pas le support d'enregistrement (S) à un état dans lequel le corps d'application de pression (223) presse le support d'enregistrement (S).

10. Butée (107) selon la revendication 9, dans laquelle le moyen élastique d'application de force (243) est un quelconque parmi un ressort linéaire, une éponge élastique, un caoutchouc, un ressort de torsion et un ressort à lame.

11. Butée (107) selon l'une quelconque des revendications précédentes, dans laquelle le moyen de maintien (222) inclut un dispositif de mise en prise (224c), et la butée (107) est fixée par le dispositif de mise en prise (224c) à la cassette d'alimentation (101).

12. Cassette d'alimentation (101) comprenant :

un corps de bâti de cassette (301) recevant un support d'enregistrement (S), et
la butée (107) selon l'une quelconque des revendications 1 à 11.

13. Dispositif d'alimentation (30) comprenant :

la cassette d'alimentation (101) selon la revendication 12, et
un élément d'alimentation (302) configuré pour séparer, un par un, le support d'enregistrement (S) dans la cassette d'alimentation (101).

14. Appareil de formation d'image (300) comprenant :

le dispositif d'alimentation (30) selon la revendication 13, et
une unité de formation d'image configurée pour former une image sur le support d'enregistrement (S) alimenté par le dispositif d'alimentation (30).

# FIG.1

# FIG.2

(a)

(b)

# FIG.3

# FIG.4

# FIG.5

(a)

(b)

(c)

(d)

# FIG.6

(a)

(b)

(c)

(d)

# FIG.7

# FIG.8

(a)

(b)

# FIG.9

(a)

(b)

FIG.10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1413533 A1